# EUROPÄISCHE PATENTANMELDUNG

(11) **EP 1 249 985 A2**
(43) Veröffentlichungstag der Anmeldung: **16.10.2002**
(21) Anmeldenummer: 02100331.4
(22) Anmeldetag: 02.04.2002
(51) Int. Cl.: H04L 29/06

(54) **Verfahren für eine Datenübertragung über ein IP-orientiertes Netzwerk**

(30) Priorität: 09.04.2001 DE 10117680
(71) Anmelder: SIEMENS AKTIENGESELLSCHAFT, 80333 München (DE)
(72) Erfinder: Brüggemeier, Wolfgang, 33129 Delbrück (DE); Kage, Gisbert, 33106 Paderborn (DE); Karrengarn, Michael, 48165 Münster (DE)

(57) **Zusammenfassung**

Die Erfindung betrifft ein Verfahren für eine Datenübertragung zwischen einer ersten Einrichtung (C1) und einer zweiten Einrichtung (S) über ein IP-orientiertes Netzwerk (IP-N), wobei zwischen der ersten und der zweiten Einrichtung (C1, S) eine Sicherheitseinrichtung (FW-S) angeordnet ist. Insbesondere wird durch die Erfindung eine Datenübertragung zwischen CORBA-Objekten über eine oder mehrere Sicherheitseinrichtungen (FW-S) hinweg realisiert. Erfindungsgemäß wird bei Empfang eines von der ersten Einrichtung (C1) gesendeten Nachrichtenpakets (N) an der Sicherheitseinrichtung (FW-S) anhand einer Teilkomponente des empfangenen Nachrichtenpakets (N) ermittelt, ob die erste Einrichtung (C1), bzw. das auf der ersten Einrichtung (C1) ablaufende CORBA-Objekt, für eine Datenübertragung über die Sicherheitseinrichtung (FW-S) freigeschaltet ist.

## Beschreibung

Die Erfindung betrifft ein Verfahren für eine Datenübertragung zwischen einer ersten Einrichtung und einer zweiten Einrichtung über ein IP-orientiertes Netzwerk (IP-N), wobei zwischen der ersten und der zweiten Einrichtung eine Sicherheitseinrichtung angeordnet ist.

Bei modernen Software-Architekturen geht man vermehrt dazu über die einzelnen Bestandteile einer Software - in der Literatur auch als Objekte bezeichnet - auf unterschiedlichen Einrichtungen eines Netzwerks ablaufen zu lassen. In diesem Zusammenhang wird in der Literatur häufig von verteilten Objekten gesprochen. Bei derartigen Netzwerken handelt es sich häufig um IP-orientierte (Internet Protokoll) Netzwerke, wie z.B. das Internet oder lokale Netzwerke (häufig mit LAN abgekürzt).

Im Rahmen von verteilten Objekten ist es notwendig, daß die jeweiligen Objekte und ihre zugehörigen Schnittstellen - in der Literatur auch als Methoden bezeichnet - so definiert sind, daß die Schnittstelle eines Objektes von den anderen Objekten aufgerufen werden kann, d.h. daß eine Kommunikation unter den Objekten ermöglicht wird. Auf welcher Einrichtung eines Netzwerkes die einzelnen Objekte dabei ablaufen spielt keine Rolle, d.h. die Kommunikation zwischen den einzelnen Objekten ist nicht auf eine Einrichtung des Netzwerkes begrenzt, sondern kann einrichtungsübergreifend stattfinden.

Eine bekannte Technik für die Realisierung verteilter Objekte ist die sogenannte CORBA-Architektur (Common Object Request Broker Architekture). Eine Kommunikation zwischen CORBA-Objekten ist eine sogenannte End-to-End-Kommunikation, d.h. es besteht eine direkte Verbindung zwischen den beiden CORBA-Objekten. Ein Zugriff eines CORBA-Objektes auf ein weiteres, auf einer anderen Einrichtung ablaufendes CORBA-Objekt erfolgt über eine sogenannte Objektreferenz - in der Literatur häufig mit IOR abgekürzt. Eine Objektreferenz umfaßt dabei eine die andere Einrichtung eindeutig identifizierende Netzwerkadresse und weitere objektspezifische Charakteristika, durch die das CORBA-Objekt eindeutig auf der anderen Einrichtung identifiziert wird.

Der Ansatz der End-to-End-Kommunikation gemäß der CORBA-Architektur wird jedoch durch die Sicherheitsproblematik in Netzwerken, wie dem Internet, eingeschränkt. Die Verwendung von Sicherheitseinrichtungen - in der Literatur häufig als 'Firewalls' bezeichnet - erzwingt eine Untergliederung der End-to-End-Kommunikation in eine mehrstufige Kommunikation, d.h. eine Kommunikation zwischen auf unterschiedlichen Einrichtungen ablaufenden Objekten erfolgt unter Zwischenschaltung einer oder mehrerer Firewalls.

Hierbei tritt das Problem auf, daß für eine Kommunikation zwischen verteilten Objekten über eine oder mehrere Firewalls hinweg, sowohl die Objekte als auch die Firewalls manuell dafür eingerichtet werden müssen. Dabei sind für unterschiedliche Firewall-Produkte unterschiedliche Einstellungen vorzunehmen, so daß eine derartige Einrichtung mit einem hohen administrativen Aufwand verbunden ist.

Der vorliegenden Erfindung liegt die Aufgabe zugrunde, Maßnahmen vorzusehen, durch die eine Einrichtung der jeweiligen Objekte und Firewalls automatisch erfolgen kann.

Die Lösung dieser Aufgabe erfolgt erfindungsgemäß mit den Merkmalen des Patentanspruchs 1.

Gemäß der vorliegenden Erfindung erfolgt eine Datenübertragung zwischen einer ersten und einer zweiten Einrichtung über ein IP-orientiertes Netzwerk, wobei zwischen der ersten und der zweiten Einrichtung eine Sicherheitseinrichtung angeordnet ist. Bei Empfang eines von der ersten Einrichtung gesendeten Nachrichtenpakets an der Sicherheitseinrichtung wird anhand einer Teilkomponente des empfangenen Nachrichtenpakets ermittelt, ob die erste Einrichtung für eine Datenübertragung über die Sicherheitseinrichtung freigeschaltet ist.

Ein wesentlicher Vorteil des erfindungsgemäßen Verfahrens besteht darin, daß das Verfahren auf einfache Weise und ohne großen Aufwand in bereits bestehende Systeme implementiert werden kann.

Ein weiterer Vorteil des erfindungsgemäßen Verfahrens besteht darin, daß das Verfahren allgemein einsetzbar und somit ohne Änderung für unterschiedlichen Firewall-Produkte verwendbar ist.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Verwendung von standardisierten Übertragungsprotokollen - wie z.B. dem IIOP-Protokoll (Internet Inter-ORB Protocol)-für eine Informationsübermittlung über das IP-orientierte Netzwerk eine gesicherte Informationsübertragung gewährleistet werden kann.

Ein Ausführungsbeispiel der Erfindung wird im folgenden anhand der Zeichnungen näher erläutert.

Dabei zeigen:
- Fig. 1:: ein Strukturbild zur schematischen Darstellung der am erfindungsgemäßen Verfahren beteiligten wesentlichen Funktionseinheiten; und
- Fig. 2:: ein Ablaufdiagramm zur Veranschaulichung der beim erfindungsgemäßen Verfahren ablaufenden wesentlichen Verfahrensschritte.

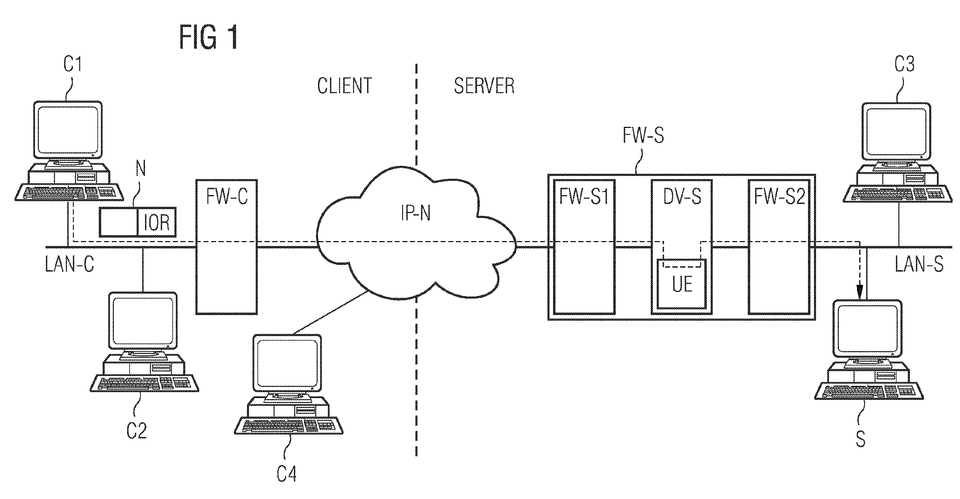

Fig. 1 zeigt ein Strukturbild zur schematischen Darstellung einer sogenannten Client-Server-Architektur. Insbesondere zeigt die Figur ein erstes lokales Netzwerk LAN-C - im folgenden als Client-Netzwerk LAN-C bezeichnet - und ein zweites lokales Netzwerk LAN-S - im folgenden als Server-Netzwerk LAN-S bezeichnet - wobei das Client-Netzwerk LAN-C und das Server-Netzwerk LAN-S über ein IP-orientiertes Netzwerk IP-N, - beispielsweise das Internet - miteinander verbunden sind.

Das Client-Netzwerk LAN-C ist über eine client-seitige Firewall FW-C und das Server-Netzwerk LAN-S ist über eine server-seitige Firewall FW-S mit dem IP-orientierten Netzwerk IP-N verbunden. Durch die client-seitige Firewall FW-C und die server-seitige Firewall FW-S erfolgt jeweils eine sicherheitstechnische Entkopplung der lokalen Netzwerke LAN-C, LAN-S vom IP-orientierten Netzwerk IP-N, d.h. daß durch die Firewalls FW-C, FW-S eine nicht autorisierte bidirektionale Datenübertragung zwischen den lokalen Netzwerken LAN-C, LAN-S und dem IP-orientierten Netzwerk IP-N unterbunden wird. Die server-seitige Firewall FW-S umfaßt eine erste Firewall FW-S1, eine zweite Firewall FW-S2 und eine zwischen der ersten und der zweiten Firewall FW-S1, FW-S2 angeordnete Datenverarbeitungseinrichtung DV-S. Auf der Datenverarbeitungseinrichtung DV-S läuft eine Applikation UE - in der Literatur häufig auch als 'Proxy' bezeichnet - ab, durch die eine für eine Datenübertragung über die server-seitige Firewall FW-S erfindungsgemäße Adreßkonvertierung realisiert wird.

Im vorliegenden Ausführungsbeispiel sind an das Client-Netzwerk LAN-C eine erste und eine zweite Client-Einrichtung C1, C2 angeschlossen. Am Server-Netzwerk LAN-S ist eine Server-Einrichtung S und eine dritte Client-Einrichtung C3 angeschlossen. Zusätzlich ist eine vierte Client-Einrichtung C4 direkt an das IP-orientierte Netzwerk IP-N angeschlossen. Die Client- und Server-Einrichtungen C, S sind beispielsweise als 'Personal Computer' - kurz PC - oder 'Workstations' ausgestaltet.

Das erfindungsgemäße Verfahren soll im folgenden beispielhaft anhand einer Übermittlung eines Nachrichtenpakets N (durch den gestrichelten Pfeil veranschaulicht) ausgehend von der ersten Client-Einrichtung C1 zur Server-Einrichtung S veranschaulicht werden. Sowohl auf der ersten Client-Einrichtung C1 als auch auf der Server-Einrichtung S laufen - nicht dargestellte - CORBA-Anwendungen - in der Literatur häufig auch als CORBA-Objekte bezeichnet - ab, durch welche die bidirektionale Übertragung von Nachrichtenpaketen N initialisiert und gesteuert wird. Die Nachrichtenpakete N werden dabei über eine zwischen der ersten Client-Einrichtung C1 und der Server-Einrichtung S aufgebaute TCP/IP-Verbindung (Transmission Control Protocol / Internet Protocol) übermittelt, wobei die TCP/IP-Verbindung jeweils durch die client-seitige Firewall FW-C und die server-seitige Firewall FW-S unterbrochen ist.

Ein Zugriff eines CORBA-Objektes auf das auf der jeweils anderen Einrichtung ablaufende CORBA-Objekt erfolgt über eine sogenannte Objektreferenz - in der Literatur häufig mit IOR abgekürzt. Eine Objektreferenz IOR umfaßt dabei eine die andere Einrichtung eindeutig identifizierende TCP/IP-Adresse und weitere objektspezifische Charakteristika, durch die das CORBA-Objekt eindeutig auf der anderen Einrichtung identifiziert wird.

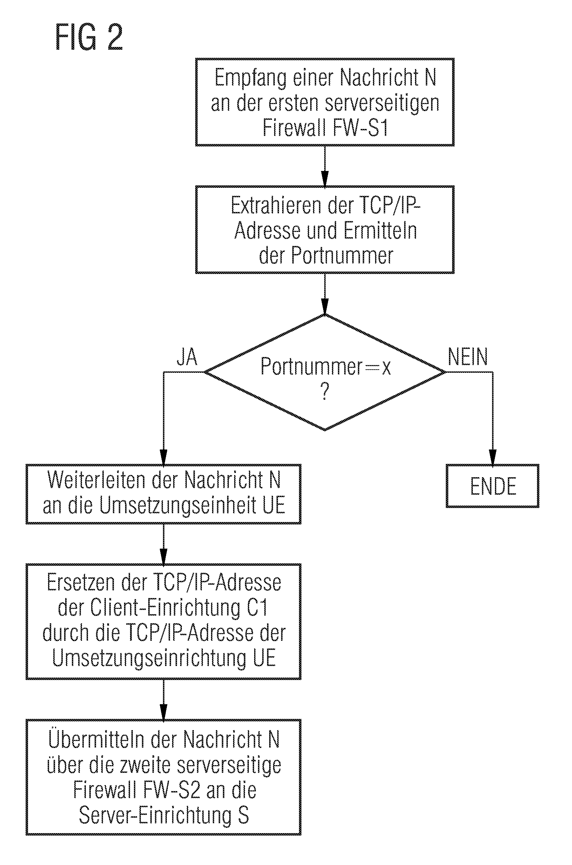

Fig. 2 zeigt ein Ablaufdiagramm zur Veranschaulichung der bei einer Übermittlung eines Nachrichtenpaketes N ausgehend von der ersten Client-Einrichtung C1 an die Server-Einrichtung S in der server-seitigen Firewall FW-S ablaufenden wesentlichen Verfahrensschritte. Das in der client-seitigen Firewall FW-C ablaufende standardmäßige Verfahren ist für die vorliegende Erfindung nicht relevant, so daß darauf nicht näher eingegangen wird.

Bei einem Empfang eines Nachrichtenpakets N an der ersten Firewall FW-S1 wird aus der Objektreferenz IOR des empfangenen Nachrichtenpaketes N die mitübertragene TCP/IP-Adresse ermittelt. Eine TCP/IP-Adresse umfaßt dabei allgemein eine die Ziel-Einrichtung - im vorliegenden Ausführungsbeispiel die Server-Einrichtung S - identifizierende IP-Adresse und eine sogenannte Portnummer, durch welche eine die Datenübertragung initialisierende und steuernde Anwendung auf der Ziel-Einrichtung eindeutig identifiziert wird. In einem nächsten Schritt wird aus der ermittelten TCP/IP-Adresse die darin enthaltene für die Datenübertragung zwischen den - nicht dargestellten - CORBA-Objekten charakteristische Portnummer ermittelt.

Entspricht die ermittelte Portnummer einer vorkonfigurierten Portnummer x, so ist das auf der ersten Client-Einrichtung C1 ablaufende CORBA-Objekt für eine Datenübertragung über die server-seitige Firewall FW-S freigeschaltet. Die Portnummer weist dabei eine Länge von 2 Byte auf. Bei der Konfiguration der 2 Byte langen Portnummer für die Kommunikation zwischen CORBA-Objekten wird erfindungsgemäß eine Portnummer größer 1024 vergeben, da die Portnummern bis 1024 bereits standardmäßig vorbelegt sind. Die Portnummern ab 1024 können benutzerindividuell verwendet werden. Entspricht die ermittelte Portnummer nicht der vorkonfigurierten Portnummer x ist das auf der ersten Client-Einrichtung C1 ablaufende CORBA-Objekt nicht für eine Datenübertragung über die server-seitige Firewall FW-S freigeschaltet und die Datenübertragung wird unterbunden.

In Fällen, in denen die ermittelte Portnummer mit der vorkonfigurierten Portnummer x übereinstimmt, leitet die erste Firewall FW-S1 das Nachrichtenpaket N an die Umsetzungseinheit UE weiter. Die Umsetzungseinheit UE speichert das empfangene Nachrichtenpaket N zwischen, extrahiert die Objektreferenz IOR und ersetzt in der Objektreferenz IOR die TCP/IP-Adresse der ersten Client-Einrichtung C1 durch die TCP-IP-Adresse der Umsetzungseinrichtung.

In einem abschließenden Schritt übermittelt die Umsetzungseinheit UE das Nachrichtenpaket über die zweite Firewall FW-S2 an die Server-Einrichtung S, wobei in der zweiten Firewall FW-S2 die TCP/IP-Adresse der Umsetzungseinheit UE für eine Datenübertragung über die zweite Firewall FW-S2 freigeschaltet ist.

Bei einer Datenübertragung ausgehend von einer am Server-Netzwerk LAN-S angeschlossenen Einrichtung C3, S an eine am Client-Netzwerk LAN-C angeschlossenen Einrichtung C1, C2 oder an die vierte Client-Einrichtung C4 läuft das oben beschriebene Verfahren in analoger Weise in umgekehrter Richtung ab.

Eine Datenübertragung zwischen der CORBA-Objekten erfolgt über das an sich bekannte, auf dem TCP/IP-Protokoll aufsetzende IIOP-Protokoll (Internet Inter-ORB Protocol).

Für das erfindungsgemäße Verfahren ist es somit nur notwendig sowohl in den an den Netzwerken LAN-C, LAN-S, IP-N angeschlossenen Einrichtungen C, S als auch in den Firewall-Einrichtungen FW eine Portnummer x zu definieren, die für die Kommunikation zwischen verteilten CORBA-Objekten freigeschaltet ist.

## Patentansprüche

1. Verfahren für eine Datenübertragung zwischen einer ersten Einrichtung (C1) und einer zweiten Einrichtung (S) über ein IP-orientiertes Netzwerk (IP-N), wobei zwischen der ersten und der zweiten Einrichtung (C1, S) eine Sicherheitseinrichtung (FW-S) angeordnet ist,
bei dem bei Empfang einer von der ersten Einrichtung (C1) gesendeten Nachricht (N) an der Sicherheitseinrichtung (FW-S) anhand einer Teilkomponente der empfangenen Nachricht (N) ermittelt wird, ob die erste Einrichtung (C1) für eine Datenübertragung über die Sicherheitseinrichtung (FW-S) freigeschaltet ist.

2. Verfahren nach Anspruch 1,
**dadurch gekennzeichnet,**
**daß** die Datenübertragung durch auf der ersten und der zweiten Einrichtung (C1, S) ablaufende CORBA-Anwendungen (Common Object Request Broker Architekture) initialisiert und gesteuert wird.

3. Verfahren nach Anspruch 1 oder 2,
**dadurch gekennzeichnet,**
**daß** die Nachricht (N) über eine TCP/IP-Verbindung (Transmission Control Protocol / Internet Protocol) übermittelt wird.

4. Verfahren nach Anspruch 3,
**dadurch gekennzeichnet,**
**daß** die Datenübertragung zwischen der ersten Einrichtung (C1) und der zweiten Einrichtung (S) auf Basis des an sich bekannten IIOP-Protokolls (Internet InterORB Protocol) erfolgt.

5. Verfahren nach einem der Ansprüche 2 bis 4,
**dadurch gekennzeichnet,**
**daß** die Teilkomponente durch eine die CORBA-Anwendungen identifizierende Portnummer einer TCP/IP-Adresse gebildet wird.

6. Verfahren nach Anspruch 5,
**dadurch gekennzeichnet,**
**daß** die Portnummer größer 1024 ist.

7. Verfahren nach einem der vorhergehenden Ansprüche,
**dadurch gekennzeichnet,**
**daß** die Sicherheitseinrichtung (FW-S) eine erste Sicherheitseinheit (FW-S1), eine zweite Sicherheitseinheit (FW-S2) und eine zwischen den Sicherheitseinheiten (FW-S1, FW-S2) angeordnete Umsetzungseinheit (UE) umfaßt, wobei eine Überprüfung der Teilkomponente durch die erste Sicherheitseinheit (FW-S1) vorgenommen wird.

8. Verfahren nach Anspruch 7,
**dadurch gekennzeichnet,**
**daß** in Fällen, in denen die Nachricht (N) für eine Übertragung über die Sicherheitseinrichtung (FW-S) freigeschaltet ist, die Nachricht (N) an die Umsetzungseinheit (UE) weitergeleitet wird.

9. Verfahren nach Anspruch 8,
**dadurch gekennzeichnet,**
**daß** durch die Umsetzungseinheit (S-P) in der Nachricht (N) eine die erste Einrichtung (C1) identifizierende TCP/IP-Adresse durch eine die Umsetzungseinheit (UE) identifizierende TCP/IP-Adresse ersetzt wird, und die Nachricht über die zweite Sicherheitseinheit (FW-S2) an die zweite Einrichtung (S) weitergeleitet wird.
